# EUROPÄISCHE PATENTSCHRIFT

(11) **EP 3 885 957 B1**
(45) Veröffentlichungstag und Bekanntmachung des Hinweises auf die Patenterteilung: **31.12.2025**
(21) Anmeldenummer: 21164407.5
(22) Anmeldetag: 23.03.2021
(51) Int. Cl.: G06F 21/64, G06F 16/18, G06F 16/11, G06F 11/14, G06F 21/62, G06F 11/07

(54) **VORRICHTUNG ZUR SPEICHERUNG VON DATEN IN EINEM NICHTFLÜCHTIGEN SPEICHER**
DEVICE FOR STORING DATA IN A NON-VOLATILE MEMORY
DISPOSITIF DE MÉMORISATION DE DONNÉES DANS UNE MÉMOIRE NON VOLATILE

(30) Priorität: 24.03.2020 DE 102020108101
(43) Veröffentlichungstag der Anmeldung: 29.09.2021
(73) Patentinhaber: Pilz GmbH & Co. KG, 73760 Ostfildern (DE)
(72) Erfinder: Adler, Sven, 73760 Ostfildern (DE); Zell, Christoph, 73760 Ostfildern (DE)
(74) Vertreter: Witte, Weller & Partner Patentanwälte mbB

(56) Entgegenhaltungen:
- EP-A1- 0 489 204
- US-A- 4 180 854

## Beschreibung

Die vorliegende Erfindung betrifft eine Vorrichtung zur Speicherung von Daten in einem nichtflüchtigen Speicher sowie entsprechende Verfahren.

Nichtflüchtige Speicher bezeichnen in der Informationstechnologie solche Datenspeicher, deren Informationen auf Dauer erhalten bleiben, also auch dann wenn das Gerät, welches den Speicher beherbergt nicht in Betrieb ist oder der Speicher nicht mehr mit Strom versorgt wird. Im Gegensatz zu flüchtigen Speichern, wie beispielsweise Arbeitsspeicher oder die Register einer CPU, werden nichtflüchtige Speicher dazu verwendet, Konfigurationsdaten, Benutzerprofile, Passwörter, Zertifikate oder andere Daten zu speichern, die während des Betriebs veränderbar sind und nach dem Ausschalten erhalten bleiben, um nach einem Neustart erneut verwendet zu werden.

Für einen flexiblen und komfortablen Zugriff auf die Daten in einem nichtflüchtigen Speicher kann dieser in einer definierten Art und Weise organisiert sein. Die gängigste Organisationsstruktur ist ein Dateisystem, bei dem ein Bereich des Speichers die eigentlichen Nutzdaten enthält und ein weiterer Bereich eine Beschreibungsstruktur, welche die Aufteilung der Nutzdaten katalogisiert. Ein Dateisystem oder eine andere komplexe Speicherstruktur haben den Vorteil, dass große Datenmengen strukturiert abgelegt und einfacher verarbeitet werden können. Bspw. ermöglichen Dateisysteme einen wahlfreien Zugriff auf die Daten sowie komplexe Verwaltungsstrukturen wie Verzeichnisbäume, in denen die Daten organsiert werden können.

Mit steigender Komplexität der Organisationsstruktur des Speichers, steigt jedoch auch der Aufwand, der betrieben werden muss, um auf den Speicher zuzugreifen. Zudem benötigt die Organisationsstruktur selbst Speicherplatz, der für Nutzdaten nicht mehr zur Verfügung steht.

Nicht für jede Anwendung steht ein flexibler und komfortabler Zugriff über ein Dateisystem oder eine andere komplexe Speicherstruktur im Vordergrund. Bei kleineren Systemen, wie bspw. eingebetteten Systemen, die eine dedizierte Aufgabe wahrnehmen, sind andere Eigenschaften wichtig. Bspw. ist bei Geräten, die Log- und Diagnosedaten auf nichtflüchtigen Speichern aufzeichnen, von Bedeutung, dass die Daten sicher, konsistent und nachvollziehbar in dem nicht flüchtigen Speicher hinterlegt werden können und dies auch bei instabilen Situationen gewährleistet werden kann (Transaktionssicherheit). D.h., ein Datenverlust sollte bei einem Spannungsausfall so gering wie möglich sein und die Konsistenz der geschriebenen Daten insgesamt nicht beeinflussen. Gleichzeitig darf ein Mehraufwand, der hierfür betrieben werden muss, nicht zu hoch sein, um auch bei Geräten mit geringer Rechenkapazität und geringem Speicher realisierbar zu sein.

Die im europäischen Prüfungsverfahren angeführte Druckschrift US 4 180 854 A zeigt einen programmierbaren Rechner, auf dem ein BASIC-Interpreter ausgeführt wird, sowie die hiermit verbundene Möglichkeit, Zeichenketten in einem internen Speicher zu verarbeiten und auf einem nichtflüchtigen Speicher abzulegen.

Es ist eine Aufgabe der vorliegenden Erfindung eine Vorrichtung sowie ein entsprechendes Verfahren zur Speicherung von Daten in einem nichtflüchtigen Speicher anzugeben, die sich einfach auch bei Systemen mit geringer Rechenkapazität und geringem Speicher realisieren lassen und gleichzeitig eine hohe Transaktionssicherheit und inhärente Konsistenz gewährleisten können. Insbesondere ist es eine Aufgabe, Transaktionssicherheit und inhärente Konsistenz auch bei Stromausfall ohne spezielle Vorkehrung sicherzustellen.

Gemäß einem Aspekt der vorliegenden Offenbarung wird die Aufgabe gelöst durch eine Vorrichtung zur Speicherung von Daten in einem nichtflüchtigen Speicher, umfassend eine Datenverarbeitungseinheit, die eingerichtet ist, Datenblöcke zu erfassen, jeden Datenblock der Datenblöcke mit einem Abschlusselement zu terminieren und die terminierten Datenblöcke zu einem seriellen Datenstrom zusammenzusetzen, sowie eine Speichereinheit, die eingerichtet ist, den seriellen Datenstrom sequentiell in den nichtflüchtigen Speicher zu schreiben, wobei das Abschlusselement zwischen einem ersten Codewort und mindestens einem zweiten Codewort variierbar ist, dadurch gekennzeichnet, dass die Speichereinheit den nichtflüchtigen Speicher solange mit dem seriellen Datenstrom beschreibt, bis der Speicher keinen freien Speicherbereich mehr hat, die Datenverarbeitungseinheit zu diesem Zeitpunkt zwischen der Verwendung des ersten Codeworts und des zweiten Codeworts als Abschlusselement wechselt und fortan den seriellen Datenstrom mit dem gewechselten Abschlusselement erzeugt, und wobei die Speichereinheit den nichtflüchtigen Speicher nach dem Wechsel rollierend mit dem seriellen Datenstrom überschreibt.

Gemäß einem weiteren Aspekt der vorliegenden Offenbarung wird die Aufgabe gelöst durch ein Verfahren zum Speichern von Daten in einem nichtflüchtigen Speicher, mit den Schritten:
durch eine Datenverarbeitungseinheit:
   - Erfassen von Datenblöcken;
   - Terminieren jedes Datenblocks der Datenblöcke mit einem Abschlusselement;
   - Zusammensetzen der terminierten Datenblöcke zu einem seriellen Datenstrom, wobei das Abschlusselement zwischen einem ersten Codewort und einem zweiten Codewort variierbar ist;
durch eine Speichereinheit:
   - Schreiben des seriellen Datenstroms in den nichtflüchtigen Speicher;
dadurch gekennzeichnet, dass die Speichereinheit den nichtflüchtigen Speicher solange mit dem seriellen Datenstrom beschreibt, bis der Speicher keinen freien Speicherbereich mehr hat, wobei die Datenverarbeitungseinheit zu diesem Zeitpunkt zwischen der Verwendung des ersten Codeworts und des zweiten Codeworts als Abschlusselement wechselt und fortan den seriellen Datenstrom mit dem gewechselten Abschlusselement erzeugt, und wobei die Speichereinheit den nichtflüchtigen Speicher nach dem Wechsel rollierend mit dem seriellen Datenstrom überschreibt.

Gemäß einem weiteren Aspekt der vorliegenden Offenbarung wird die Aufgabe gelöst durch ein Verfahren zum Auslesen von Daten aus einem nichtflüchtigen Speicher, mit den Schritten:
- Lesen ab einer Startposition des nichtflüchtigen Speichers eines ersten sequentiellen Datenstroms von dem nichtflüchtigen Speicher bis zum
- Auffinden eines Übergangs von einem vordefinierten ersten Codewort zu einem vordefinierten unterschiedlichen zweiten Codewort in dem ersten sequentiellen Datenstrom;
- Festlegen einer initialen Leseposition an einem Ende desaufgefundenen Übergangs;
- Lesen eines zweiten sequentiellen Datenstroms beginnend an der initialen Leseposition bis zu einem letzten zweiten Codewort;
- Zerlegen des zweiten sequentiellen Datenstroms in Datenblöcke, die jeweils mit dem zweiten Codewort terminiert sind;
- Lesen eines dritten sequentiellen Datenstroms beginnend am Ende des letzten zweiten Codeworts, rollierend bis zu einem Anfang des Übergangs;
- Zerlegen des dritten sequentiellen Datenstroms in Datenblöcke, die jeweils mit dem ersten Codewort terminiert sind.

Es ist somit eine Idee der vorliegenden Erfindung den nichtflüchtigen Speicher sequentiell zu beschreiben ohne hierfür auf eine explizite Organisationsstruktur des Datenspeichers zurückzugreifen. Vielmehr ist es eine Idee dem seriellen Datenstrom eine implizite Organisationsstruktur aufzuprägen, die sich an dem abstrakten Datentyp einer Warteschlange (engl. Queue/FIFO) anlehnt.

Die Speichereinheit beschreibt den nichtflüchtigen Speicher sequentiell. Dies hat den Vorteil, dass alle Speicherzellen gleichmäßig beschrieben werden. Auf diese Weise können bei nichtflüchtigen Speichern, die eine begrenzte Lebensdauer haben, wie bspw. Flash-Speicher, die maximalen Schreibzyklen ausgenutzt werden. Ohne auf Methoden wie Wear-Leveling zurückgreifen zu müssen kann der Speicher optimal beschrieben werden.

Der serielle Datenstrom kann zudem einfach in seriellen Protokollen (z.B. RS232, Ethernet, etc.) verwendet werden, ohne dass zusätzlicher Rechenaufwand für die Umwandlung und Serialisierung notwendig ist. Damit eignet sich die Vorrichtung für eingebettete Systeme, die nur über begrenzte Ressourcen verfügen und keine zusätzlichen Einheiten für die Umsetzung von Kommunikationsprotokollen aufweisen.

Die Datenverarbeitungseinheit prägt dem seriellen Datenstrom die implizite Organisationsstruktur mit minimalem Mehraufwand auf. Je nach Anwendungsfall sind ein bis zwei zusätzliche Bytes pro Datenblock ausreichend, um die implizite Organisationsstruktur zu realisieren. Zusammen mit dem Wegfall einer expliziten Organisationsstruktur wird der Speicher nahezu optimal ausgelastet.

Zudem hat die implizite Organisationsstruktur den Vorteil einer inhärenten Konsistenz, d.h., die Struktur ist in sich sehr robust und bleibt insgesamt funktionsfähig, wenn einzelne Speicherzellen defekt sind. Ferner reduziert die Kombination des sequentiellen Schreibens mit der einfachen impliziten Organisationsstruktur die notwendigen Programmschritte pro Schreibvorgang (Transaktion). Auf diese Weise kann eine hohe Transaktionssicherheit gewährleistet werden, wodurch ein Datenverlust bei unerwartetem Spannungsausfall reduziert wird. Die Vorrichtung ist somit im hohen Maße geeignet sicherheitsrelevante Log- oder Diagnosedaten zu speichern, deren Erfassung besonders bei instabilen Zuständen von Bedeutung ist, bspw. um einen kontrollierbaren und lückenlosen Audit Trail zu ermöglichen.

Die eingangsgenannte Aufgabe ist somit vollständig gelöst.

In einer weiteren Ausgestaltung kann die Speichereinheit dazu eingerichtet sein, den nichtflüchtigen Speicher sequentiell zu adressieren, um diesen vollständig sequentiell zu beschreiben. Die Speichereinheit kann den nichtflüchtigen Speicher ohne eine explizite Organisationsstruktur beschreiben.

Mittels einer iterativen Adressierung kann die Speichereinheit einfach und effizient auf den Speicher zugreifen und das sequentielle Schreiben realisieren. Die Ausgestaltung trägt somit zu einer weiteren Reduzierung des Mehraufwands beim Speichern auf den nichtflüchtigen Speicher bei.

In einer weiteren Ausgestaltung kann die Speichereinheit dazu eingerichtet sein, den nichtflüchtigen Speicher sequentiell auszulesen, einen Wechsel des Abschlusselements zu identifizieren, um eine initiale Startposition zu bestimmen, sowie an der initialen Startposition mit dem sequentiellen Schreiben des seriellen Datenstroms zu beginnen.

Gemäß dieser Ausgestaltung kann die Speichereinheit zunächst eine initiale Startposition bestimmen, bspw. nach einem Neustart. Aufgrund der impliziten Organisationsstruktur ist hierfür nur ein einmaliger sequentieller Suchlauf notwendig. Die initiale Startposition ist die Position nach dem Abschlusselement des zuletzt geschriebenen Elements. Das zuletzt geschriebene Element kann aus den sequentiell ausgelesenen Daten anhand eines Übergangs vom ersten Codewort zum zweiten Codewort oder umgekehrt identifiziert werden. Eine initiale Startposition kann somit schnell und effizient bestimmt werden. Ein Neustart, wie er bei eingebetteten Systemen häufig der Fall sein kann, kann auf diese Weise schnell und effizient und im Wesentlichen ohne Datenverlust ausgeführt werden.

In einer weiteren Ausgestaltung kann die Speichereinheit dazu eingerichtet sein, eine gegenwärtige Schreibposition in einem flüchtigen Speicher zu speichern.

Indem die Speichereinheit eine gegenwärtige Schreibposition hinterlegt, kann die Speichereinheit nach einer Schreibpause ohne vorherigen Suchlauf neue Daten in den Speicher schreiben. Die gegenwärtige Schreibposition entspricht einer Position nach dem Abschlusselement des zuletzt geschriebenen Elements. Ein Schreibvorgang (Transaktion) kann auf diese Weise besonders effizient und mit nur wenigen Operationen ausgeführt werden, da unmittelbar mit dem physischen Schreiben in den Speicher begonnen werden kann.

In einer weiteren Ausgestaltung kann die Speichereinheit dazu eingerichtet sein, die gegenwärtige Position in einem flüchtigen Speicher zu speichern, und nur, wenn ein Wert für die gegenwärtige Schreibposition in dem flüchtigen Speicher hinterlegt ist, an der gegenwärtigen Position den seriellen Datenstrom zu schreiben.

Gemäß dieser Ausgestaltung setzt die Speichereinheit einen Schreibvorgang an der gegenwärtigen Position nur dann fort, wenn ein Wert für die gegenwärtige Position in dem flüchtigen Speicher hinterlegt ist. Ist kein Wert hinterlegt kann die Speichereinheit mittels eines Suchlauf eine initiale Schreibposition aus den bereits gespeicherten Daten bestimmen und an dieser Position den Schreibvorgang fortsetzen. Das Hinterlegen der gegenwärtigen Position in einem flüchtigen Speicher ermöglicht somit ein kontinuierliches Schreiben des Speichers im laufenden Betrieb und erzwingt einen Suchlauf, falls der flüchtige Speicher zurückgesetzt worden ist, bspw. aufgrund eines Neustarts. Die Ausgestaltung trägt somit zu einer sicheren Steigerung der Effizienz bei.

In einer weiteren Ausgestaltung kann die Datenverarbeitungseinheit eingerichtet sein, in den Datenblöcken Zeichen, die dem ersten Codewort oder dem zumindest zweiten Codewort entsprechen, zu maskieren.

Gemäß dieser Ausgestaltung kann sichergestellt sein, dass in den Daten keine Zeichen vorkommen, die den Abschlusselementen entsprechen und somit zu einer Inkonsistenz der impliziten Organisationsstruktur führen würden. Auf diese Weise können Daten unabhängig von der Wahl der Abschlusselemente gespeichert werden bzw. die Abschlusselemente können unabhängig von den zu speichernden Daten gewählt werden.

In einer weiteren Ausgestaltung kann die Datenverarbeitungseinheit eingerichtet sein, für jeden Datenblock der Datenblöcke eine Checksumme zu generieren und dem jeweiligen Datenblock anzuhängen.

Gemäß dieser Ausgestaltung wird somit jeder Datenblock mit einer Checksumme versehen. Die Daten können so auf einfache Weise gegen Verfälschungen gesichert werden ohne die implizite Organisationsstruktur zu verändern. Die Zuverlässigkeit der Daten kann auf diese Weise erhöht werden. Die Ausgestaltung trägt somit zur Eignung als Log- und Diagnosespeicher bei, die einen Audit Trail gewährleistet.

In einer weiteren Ausgestaltung kann die Datenverarbeitungseinheit eingerichtet sein, jeden Datenblock der Datenblöcke zu verschlüsseln.

Gemäß dieser Ausgestaltung können trotz des Fehlens einer expliziten Organisationsstruktur die Daten gegen Manipulation und unerlaubte Einsichtnahme gesichert werden. Die Ausgestaltung trägt somit weiter zur Eignung als Log- und Diagnosespeicher bei.

In einer weiteren Ausgestaltung können die Datenblöcke eine variable Länge haben.

Die implizite Organisationsstruktur ermöglicht es ohne weitere Vorkehrungen, Daten variabler Länge zu speichern. Der verfügbare Speicherbereich kann auf diese Weise optimal ausgenutzt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht eines Ausführungsbeispiels einer Vorrichtung zur Speicherung von Daten in einem nichtflüchtigen Speicher,
- Fig. 2: eine schematische Ansicht eines Schreibvorgangs in den nichtflüchtigen Speicher,
- Fig. 3: eine schematische Ansicht eines seriellen Datenstroms gemäß einem bevorzugten Ausführungsbeispiel,
- Fig. 4: eine schematische Darstellung eines Ausführungsbeispiels eines Verfahrens zur Speicherung von Daten in einem nichtflüchtigen Speicher.

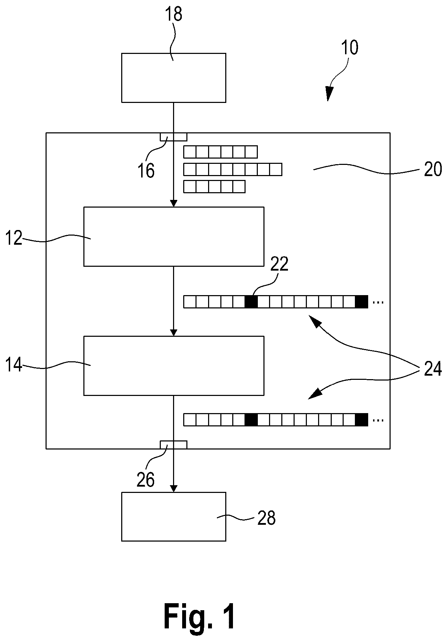

Fig. 1 zeigt ein Ausführungsbeispiel einer Vorrichtung zur Speicherung von Daten in einem nichtflüchtigen Speicher. Die Vorrichtung ist hier in ihrer Gesamtheit mit der Bezugsziffer 10 bezeichnet.

Bei der Vorrichtung kann es sich um ein eingebettetes System (englisch: embedded system) handeln, d.h. eine Datenverarbeitungseinrichtung, die in einen technischen Kontext eingebunden (eingebettet) ist. Eingebettete Systeme können Überwachungs-, Steuerungs- oder Regelfunktionen ausführen und die hierfür notwendige Datenverarbeitung bereitstellen. Exemplarisch kann die Vorrichtung hier eine sicherheitsgerichtete Einrichtung sein, die eine Sicherheitsfunktion ausführt oder an deren Ausführung beteiligt ist.

Die Vorrichtung umfasst eine Datenverarbeitungseinheit 12 und eine Speichereinheit 14. Die Einheiten sind als logische Einheiten zu verstehen und können von einer einzelnen Recheneinheit ausgeführt werden. Die Recheneinheit kann eine zentrale Verarbeitungseinheit sein, wie beispielsweise ein Mikrocontroller, der neben einem Prozessor auch Peripheriefunktionen aufweisen kann.

Die Datenverarbeitungseinheit 12 kann über eine erste Schnittstelle 16 von einer Datenerfassungseinrichtung 18 Datenblöcke 20 empfangen und verarbeiten. Die Datenerfassungseinrichtung 18 kann, um bei dem Beispiel der sicherheitsgerichteten Einrichtung zu bleiben, eine Diagnoseeinheit sein, die Log- und Diagnosedaten erfasst und als Meldungen in Form von Datenblöcken 20 an die Datenverarbeitungseinheit 12 sendet. Die Meldungen können Texte, Messwerte oder andere Parameter umfassen. Die Datenblöcke 20 können variabel in ihrer Länge sein.

Die Datenverarbeitungseinheit 12 erfasst die einzelnen Datenblöcke 20 und hängt an jeden Datenblock ein Abschlusselement 22 an. Das Abschlusselement 22 kann eine definierte Symbolfolge sein, bspw. ein einzelnes Byte oder eine definierte Bytefolge. Nach dem Terminieren der Datenblöcke 20 setzt die Datenverarbeitungseinheit 12 die terminierten Datenblöcke zu einem seriellen Datenstrom 24 zusammen. Der serielle Datenstrom ist somit eine Aneinanderreihung der Datenblöcke, die jeweils durch das Abschlusselement 22 getrennt sind.

Die Datenblöcke können durch die Datenverarbeitungseinheit verändert werden, um die Datenblöcke 20 frei von Zeichen zu bekommen, die den Abschlusselementen 22 entsprechen.

Die Speichereinheit 14 ist über eine zweite Schnittstelle 26 mit einem nichtflüchtigen Speicher 28 verbunden. Die Speichereinheit 14 schreibt sequentiell in den nichtflüchtigen Speicher, um den seriellen Datenstrom 24 in dem nichtflüchtigen Speicher 28 abzulegen. Eine explizite Organisationsstruktur des nichtflüchtigen Speichers, wie bspw. ein Dateisystem, berücksichtigt die Speichereinheit 14 nicht. Vielmehr kann die Speichereinheit 14 direkt einzeladressierbare Speicherstellen des nichtflüchtigen Speichers 28 beschreiben. Die Speichereinheit 14 behandelt den nichtflüchtigen Speicher somit wie ein RAW-Device, d.h. als zeichenorientiertes Gerät, das einen direkten Zugriff auf seinen Inhalt auf Zeichenebene erlaubt und die abgelegten Daten nicht über ein Dateisystem abstrahiert. Das Vorgehen unterscheidet sich somit von einem als RAW-Modus bekannten Verfahren zur Sicherung proprietärer Daten, bei dem die proprietären Inhalte als Rohdaten in Dateien in einem Dateisystem abgelegt werden.

Grundsätzlich ist es jedoch auch denkbar, ein Dateisystem zu verwenden. Vorteilhaft lässt sich das Verfahren somit bei verschiedenen Ausgestaltungen des nichtflüchtigen Speichers einheitlich anwenden.

Die Speichereinheit 14 beschreibt den nichtflüchtigen Speicher 28 solange mit dem seriellen Datenstrom 24 bis der Speicher keinen freien Speicherbereich mehr hat, d.h. der Speicher vollständig beschrieben worden ist. Ist dieser Punkt erreicht, wechselt die Datenverarbeitungseinheit 12 das Abschlusselement 22 und erzeugt den seriellen Datenstrom 24 fortan mit einer anderen Symbolfolge als Abschlusselement 22. Die Datenverarbeitungseinheit 12 kann somit zwischen einem ersten Codewort und mindestens einem zweiten Codewort als Abschlusselement 22 wechseln, wobei der Wechsel immer dann erfolgt, wenn der Speicher vollständig beschrieben worden ist.

Nach dem Wechsel des Abschlusselements 22 beginnt die Speichereinheit 14 den nichtflüchtigen Speicher 28 von vorne sequentiell mit dem seriellen Datenstrom zu beschreiben. Die Speichereinheit 14 überschreibt somit die zuvor in dem nichtflüchtigen Speicher 28 hinterlegten Daten. Beim Überschreiben kann die Speichereinheit 14 mit den zuerst geschriebenen Daten beginnen. Die Speichereinheit 14 nutzt den nichtflüchtigen Speicher 28 somit wie einen Ringpuffer.

Durch das Erstellen des seriellen Datenstroms und durch das sequentielle Schreiben in der zuvor beschriebene Weise wird dem nichtflüchtigen Speicher eine Organisationsstruktur aufgeprägt, die folgende Eigenschaften gewährleisten kann:
- Gleichmäßiges Schreiben aller Speicherzellen;
- inhärente Konsistenz der Datenstruktur;
- hohe Transaktionssicherheit auch bei Stromausfall ohne spezielle Vorkehrungen;
- keinen Datenverlust von geschriebenen Daten;
- optimale Auslastung des Speichers aufgrund eines nur geringfügigen Mehraufwands für die Organisation der Daten;
- Wiederverwendbarkeit des seriellen Datenstroms in seriellen Kommunikationsprotokollen, wie bspw. RS232 oder Ethernet.

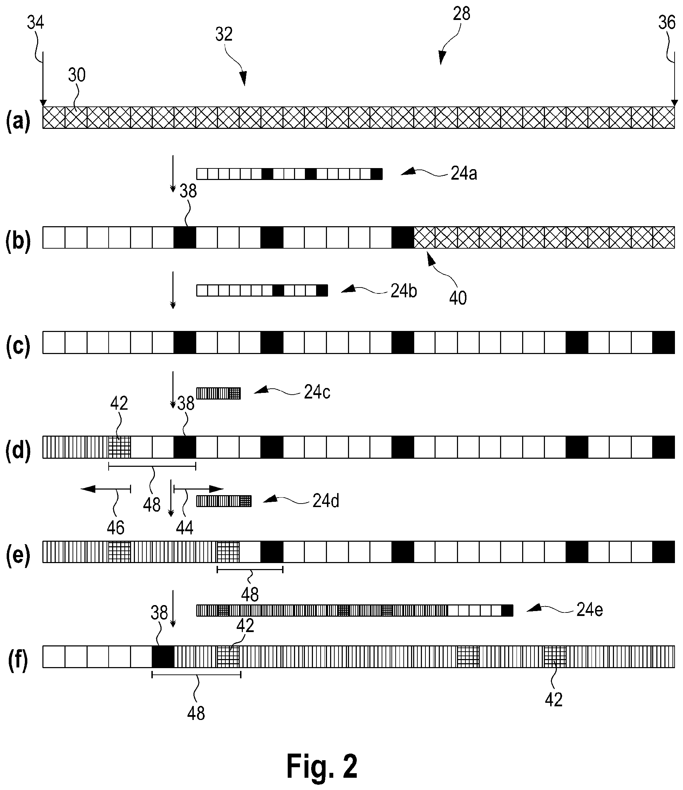

Der Speichervorgang und die implizite Organisationsstruktur werden im Folgenden mit Bezug auf die Fig. 2 näher erläutert.

Fig. 2 zeigt in einer schematischen Ansicht eines nichtflüchtigen Speichers den Schreibvorgang.

Die oberste Darstellung (a) in Fig. 2 zeigt den nichtflüchtigen Speicher 28 in einem unbeschriebenen Zustand. Der nichtflüchtige Speicher 28 ist hier exemplarisch durch neunundzwanzig Speicherzellen angedeutet. Eine einzelne Speicherzelle 30 kann bspw. ein einzelnes Byte sichern. In diesem Beispiel hat der nichtflüchtige Speicher 28 somit einen Speicherbereich 32 der neunundzwanzig Bytes umfasst. Es versteht sich, dass dieses Beispiel nur der Veranschaulichung dient. Tatsächlich kann der nichtflüchtige Speicher viel größer als hier dargestellt sein. Ferner ist es auch denkbar, dass nur ein Teil des gesamten physikalischen Speichers genutzt wird. Eine Segmentierung oder Speicherung mehrerer Listen (in einem physikalischen Speicher) ist damit möglich.

Der Speicherbereich 32 hat eine Startposition 34 und eine Endposition 36, die die erste und letzte Speicherzelle des Speicherbereichs 32 anzeigen. Der Speicherbereich 32 kann den gesamten von dem nichtflüchtigen Speicher 28 zur Verfügung gestellten Speicher umfassen. Der nichtflüchtige Speicher 28 kann ferner unformatiert sein und folglich keine explizite Organisationsstruktur aufweisen, bei der bestimmte Speicherzellen für die Organisation des Speichers reserviert sind, bspw. für eine Beschreibungsstruktur oder eine Zuordnungstabelle.

Darstellung (b) zeigt den nichtflüchtigen Speicher 28, nachdem die Speichereinheit 14 ein erstes Segment 24a des seriellen Datenstroms 24 sequentiell in diesen geschrieben hat. Initial beginnt die Speichereinheit 14 an der Startposition 34 hinter dem Codewort 38 zu schreiben. Die einzelnen Datenblöcke sind in dem seriellen Datenstrom 24 mit dem ersten Codewort 38 terminiert. Die Speichereinheit 14 kann ferner in einem internen Speicher die gegenwärtige Schreibposition 40 hinterlegen. Die gegenwärtige Schreibposition 40 kann bspw. auf die nächste noch nicht beschriebene Speicherzelle zeigen. Es versteht sich, dass die gegenwärtige Schreibposition auch auf andere Weise hinterlegbar ist.

In der Darstellung (c) hat die Speichereinheit 14 ein weiteres Segment 24b des seriellen Datenstroms 24 in den nichtflüchtigen Speicher 28 geschrieben. Hierbei hat die Speichereinheit 14 die Endposition 36 des nichtflüchtigen Speichers 28 erreicht.

Sobald die Speichereinheit 14 die Endposition 36 erreicht hat, d.h. den Speicherbereich 32 von Anfang bis Ende beschrieben hat, beginnt die Speichereinheit 14 den Speicherbereich 32 von vorne zu beschreiben. Mit anderen Worten die Speichereinheit 14 schreibt den nächsten Wert des seriellen Datenstroms an die Startposition 34 des Speicherbereichs 32 und überschreibt den zuerst hinzugefügten Wert. Gleichzeitig wechselt das Abschlusselement 22 und die Datenblöcke werden fortan mit dem zweiten Codewort 42 terminiert.

Die Darstellung (d) zeigt den nichtflüchtigen Speicher 28, nachdem ein weiteres Segment 24c des seriellen Datenstroms 24 in den Speicher geschrieben worden ist. Der Wechsel des Abschlusselements 22 wird durch die Verwendung des zweiten Codeworts 42 ersichtlich. Zur Verdeutlichung des Überschreibens sind die Nutzdaten hier ferner mit vertikalen Strichen gekennzeichnet. Die Nutzdaten sind jedoch in gleicher Weise kodiert wie die Nutzdaten zuvor, die durch die leeren Kästchen angedeutet worden sind. Lediglich das Abschlusselement 22 hat sich geändert und ist nunmehr das zweite Codewort 42.

Der Bereich zwischen den beiden Codewörtern 38 und 42 ist ungültig.

Darstellung (e) zeigt das Schreiben eines weiteren Segments 24d in den nichtflüchtigen Speicher 28. Die Speichereinheit 14 überschreibt den Speicher sequentiell. Die Codeblöcke werden dabei mit dem zweiten Codewort 42 als Abschlusselement 22 beendet.

Darstellung (f) zeigt einen Zustand des nichtflüchtigen Speichers 28, an dem das Schreiben des seriellen Datenstroms 24 erneut die Endposition 36 des Speicherbereichs 32 erreicht hat. Mit dem Erreichen der Endposition wird das Abschlusselement 22 erneut gewechselt und ist nunmehr wieder das erste Codewort 38. Wurden die Datenblöcke des Segments 24e des seriellen Datenstroms 24 bis zum Erreichen der Endposition 36 mit dem zweiten Codewort 42 terminiert, werden diese nunmehr mit dem ersten Codewort 38 abgeschlossen. Gleichzeitig beginnt die Speichereinheit 14 mit Erreichen der Endposition 36, den Speicherbereich 32 erneut von der Startposition 34 aus zu überschreiben.

Der in den Darstellungen (b) bis (f) gezeigte Ablauf setzt sich kontinuierlich fort und der Speicherbereich 32 wird wie ein Ringpuffer umlaufend beschrieben. Bei jedem Umlauf wird das Abschlusselement getauscht.

Nach dem ersten Umlauf teilt sich der Speicherbereich 32 somit in einen ersten Bereich **44** und eine zweiten Bereich 46 auf. Im ersten Bereich **44** sind die Datenblöcke mit dem ersten Codewort 38 terminiert und im zweiten Bereich 46 sind die Datenblöcke mit dem zweiten Codewort 42 terminiert. Ein Übergang 48 zwischen den Bereichen **44,** 46 ist durch einen Wechsel des Abschlusselements 22 gekennzeichnet. In den Darstellungen (d) und (e) bspw. erfolgt der Übergang 48 bei einem Wechsel von dem zweiten Codewort 42 zum ersten Codewort 38, wenn der Speicherbereich 32 von der Startposition 34 aus betrachtet wird. In der Darstellung (f) erfolgt der Wechsel bei dem Übergang 48 vom ersten Codewort 38 zum zweiten Codewort 42, wenn man den Speicherbereich 32 von der Startposition 34 aus betrachtet.

Der Anfang des Übergangs 48 ist der Anfang (Head) der Queue, das Ende des Übergangs 48 ist das Ende (Tail) der Queue.

Der Übergang 48 kann für die Bestimmung einer initialen Schreibposition verwendet werden. Bspw. kann die Speichereinheit 14 eingerichtet sein, nach einem Neustart zunächst eine initiale Schreibposition zu bestimmen, um den Schreibvorgang an dieser Stelle fortzusetzen. Falls bereits zuvor Daten in den Speicher 28 geschrieben worden sind, kann mit dem Schreibvorgang an dem Übergang 48 begonnen werden und nicht an der Startposition 34. Die Konsistenz der bereits geschriebenen Daten kann somit erhalten bleiben und die geschriebenen Daten stehen nach einem Systemneustart vollständig und konsistent zur Verfügung.

Die Speichereinheit 14 kann für den Suchlauf den Speicherbereich 32 sequentiell auszulesen und einen Übergang 48 identifizieren. Anschließend kann die Speichereinheit 14 an der Stelle des Übergangs 48, genauer gesagt nach dem ersten Abschlusselement im Bereich des Übergangs 48, den Schreibvorgang fortsetzen, indem die Speichereinheit 14 bspw. nach Auffinden der initialen Startposition diese als gegenwärtige Schreibposition hinterlegt.

Der Suchlauf ist nicht auf einen Zeitpunkt nach einem Neustart des Systems beschränkt, sondern kann auch zu einem anderen Zeitpunkt durchgeführt werden. Ein Suchlauf kann bspw. veranlasst werden, wenn eine in der Speichereinheit 14 hinterlegte gegenwärtige Schreibposition ungültig werden sollte. Bevor dies zu einem inkonsistenten Speicherabbild führt, kann mit einem Suchlauf die Integrität gewahrt werden.

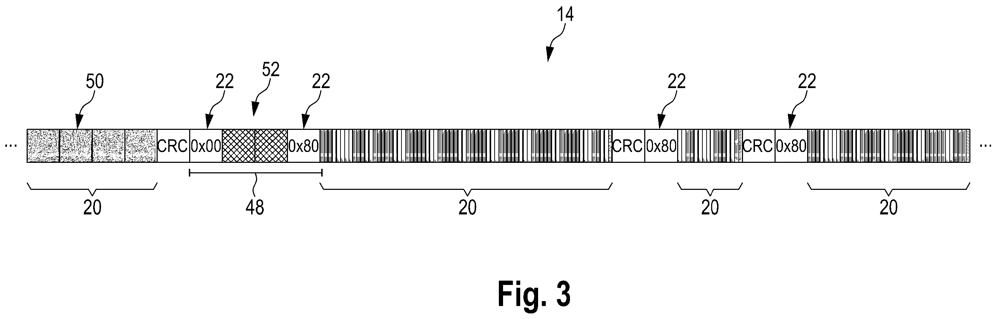

Fig. 3 zeigt eine schematische Ansicht eines seriellen Datenstroms 24 gemäß einem bevorzugten Ausführungsbeispiel.

Der serielle Datenstrom 24 setzt sich aus einer Vielzahl von aneinandergereihten Datenelementen 50 zusammen, die in aufeinanderfolgenden Speicherzellen 30 hinterlegt sind. Die Nutzdaten sind in Datenblöcke 20 zusammengefasst, die durch Abschlusselemente 22 voneinander getrennt sind. Die Abschlusselemente 22 sind hier jeweils Codewörter mit einer Länge von einem Byte. Das erste Codewort 38 ist hier exemplarisch "0x00" und das zweite Codewort 42 ist exemplarisch "0x80". Es versteht sich, dass in anderen Ausführungsbeispielen das Codewort nicht auf ein einzelnes Byte beschränkt ist, sondern eine Vielzahl von Zeichen umfassen kann.

In dem hier gezeigten Ausführungsbeispiel sind die Nutzdaten zusätzlich gesichert. Jeder Datenblock ist um eine zyklische Redundanzprüfziffer (CRC) erweitert, um die Daten des jeweiligen Datenblocks gegen Verfälschung oder Übertragungsfehler abzusichern. Mittels der zyklischen Redundanzprüfung kann die inhärente Konsistenz der dem seriellen Datenstrom aufgeprägten impliziten Organisationsstruktur weiter erhöht werden. Auch die Redundanzprüfziffer ist nicht auf ein einzelnes Byte beschränkt.

Die Nutzdaten können zusätzlich innerhalb der Datenblöcke 20 verschlüsselt sein. Dies ist in der Fig. 3 durch die graue Hinterlegung der Datenfelder angedeutet. Neben einem zusätzlichen Manipulationsschutz kann auf diese Weise auch eine unerlaubte Einsichtnahme in die Nutzdaten unterbunden werden.

Durch CRC und Verschlüsslung kann die implizite Organisationsstruktur auf einfache Weise aufgewertet werden. Damit lässt sich auch bei der einfachen Organisationsstruktur eine hohe Datenintegrität gewährleisten.

Mit der Bezugsziffer 48 ist in der Fig. 3 ein Übergang andeutet. Der Übergang 48 markiert einen Bereich in dem ein Wechsel des verwendeten Abschlusselements 22 erfolgt. Der Übergang 48 kommt dadurch zustande, dass der Speicherbereich wie ein Ringpuffer umlaufend beschrieben wird. Mit anderen Worten, wenn der verfügbare Speicherbereich vollständig beschrieben worden ist, wird am Anfang des Speicherbereichs neu begonnen und die bisherigen Daten überschrieben. Das sequentielle Schreiben in einen Ringpuffer impliziert, dass zunächst die ältesten Daten überschrieben werden. Dies ist für die Speicherung von zeitlich aufeinanderfolgenden Log- und Diagnosedaten von Vorteil. Der Speicherbereich kann auf diese Weise optimal ausgenutzt werden, um die aktuellsten Meldungen im größten Umfang zu speichern.

Durch die gleichmäßige Ausnutzung des Speichers kann zudem eine optimale Lebensdauer des Speichers erreicht werden. Die Ordnungs- bzw. Organisationsstruktur ist im Datenstrom. Durch sequenzielles Lesen/Schreiben ergeben sich gleichmäßige Schreibzugriffe auf den Speicher.

Gemäß der vorgeschlagenen impliziten Organisationsstruktur kann nahezu der gesamte zur Verfügung stehende Speicher für die Nutzdaten verwendet werden. Lediglich die Abschlusselemente sowie ggf. die CRC Prüfziffer benötigen zusätzlichen Speicherplatz. Dieser kann sich auf ein bis zwei Bytes pro Datenblock beschränken.

Abgesehen von dem Bereich 52 zwischen den beiden Abschlusselementen im Übergang 48 (hier durch die kreuzschraffierten Datenblöcke gekennzeichnet) ist der gesamte Speicherbereich mit validen Nutzdaten belegt, die durch sequentielles Auslesen und Aufspalten an den Abschlusselementen 22 wieder in die ursprünglichen Datenblöcke, bspw. in die einzelnen Diagnosemeldungen, zerlegt werden können. Die implizite Organisationsstruktur eignet sich somit im besonderen Maße zum Speichern von zeitlich aufeinanderfolgenden Meldungen, ist jedoch nicht auf solche Daten beschränkt.

Neben der optimalen Ausnutzung des Speicherbereichs des nichtflüchtigen Speichers 28 hat die Speicherung des seriellen Datenstroms zudem den Vorteil, dass der Datenstrom unmittelbar in seriellen Datenübertragungsverfahren verwendet werden kann. Für die Übertragung mittels eines seriellen Protokolls, reicht es aus, den Datenstrom unverändert sequentiell aus dem Speicher auszulesen. Der serielle Datenstrom muss folglich nicht für die Übertragung separat zusammengestellt werden. Die Anforderung an die Rechenleistung oder einen Pufferspeicher der verwendeten Recheneinheit kann somit gesenkt werden.

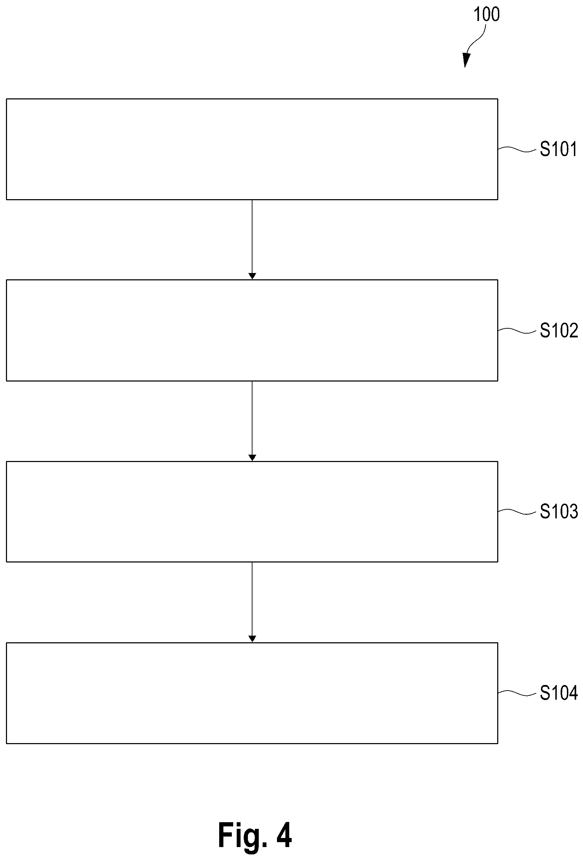

Fig. 4 fasst in einer schematischen Darstellung die Verfahrensschritte eines Verfahrens zur Speicherung von Daten in einem nichtflüchtigen Speicher gemäß einer Ausführungsform der vorliegenden Offenbarung zusammen. Das Verfahren ist in seiner Gesamtheit mit der Bezugsziffer 100 bezeichnet.

Im Schritt S101 erfasst eine Datenverarbeitungseinheit einzelne Datenblöcke 20. Die Datenblöcke 20 können bspw. Diagnosemeldungen variabler Länge eines Diagnosegeräts sein. Die Datenblöcke 20 können an die Datenverarbeitungseinheit übertragen werden oder durch Auslesen aus einem gemeinsamen Speicher aktiv erfasst werden.

Jeder Datenblock der erfassten Datenblöcke wird im Schritt S102 durch die Datenverarbeitungseinheit mit einem Abschlusselement versehen. Die Datenverarbeitungseinheit kann hierbei zwischen einem ersten und mindestens einem zweiten Abschlusselement wählen, um eine implizite Organisation bei der anschließenden Datenreihung zu ermöglichen. Optional kann die Datenverarbeitungseinheit in diesem Schritt die Daten verarbeiten und bspw. in den Daten die Zeichen, die für die Abschlusselemente verwendet werden, maskieren. Ferner ist es denkbar, die Daten an dieser Stelle mit einer Prüfziffer zu versehen oder zu verschlüsseln.

Anschließend setzt die Datenverarbeitungseinheit die terminierten Datenblöcke im Schritt S103 zu einem seriellen Datenstrom zusammen, indem die Datenverarbeitungseinheit die Blöcke aneinanderreiht. In einem bevorzugten Ausführungsbeispiel kann die Datenverarbeitungseinheit die Datenblöcke zeitlich nach ihrem Eingang bei der Datenverarbeitungseinheit zusammenfügen. Denkbar ist jedoch auch, dass die Datenverarbeitungseinheit 12 die Datenblöcke zunächst sortiert und priorisiert und sie anschließend zum seriellen Datenstrom zusammensetzt.

Im Schritt S104 wird der serielle Datenstrom in den nichtflüchtigen Speicher geschrieben, d.h. die Daten werden physisch in dem nichtflüchtigen Speicher hinterlegt. Das Schreiben in den Speicher erfolgt sequentiell. Bspw. kann der serielle Datenstrom Byte für Byte in den nichtflüchtigen Speicher übertragen werden oder aber in Blöcken definierte Größe. Die Adressierung des Speichers kann über einen einfachen Iterator erfolgen, so dass lediglich ein Zeiger auf die gegenwärtige Schreibposition hochgezählt werden muss. Dies kann ohne Zuhilfenahme eines Betriebssystems erfolgen und auch bei Mikrocontrollern mit begrenzten Ressourcen implementiert werden.

Das Schreiben im Schritt 104 entspricht einem Schreiben in einen Ringpuffer. Wenn der Speicher vollständig beschrieben worden ist, wird der Schreibvorgang am Anfang des Speichers fortgesetzt. Zusätzlich wird beim Erreichen des Endes des Speichers das Abschlusselement gewechselt. Mit anderen Worten nach jedem Durchlauf variiert das Abschlusselement, welches die Datenblöcke separiert. Auf diese Weise wird die zuvor beschriebene implizite Organisationsstruktur realisiert.

Es versteht sich, dass das Verfahren nicht auf die hier gezeigten Schritte beschränkt ist, sondern zusätzliche Schritte oder Zwischenschritte umfassen kann. Das Verfahren kann von der zuvor beschriebenen Vorrichtung implementiert werden. Alternativ kann das Verfahren auch als Computerprogramm implementiert sein, welches einen Computer oder eine andere Recheneinheit (ASIC, FPGA etc.) zum Ausführen des Verfahrens befähigt.

Die Speichervorrichtung kann neben dem Verfahren zum Speichern der Daten ein entsprechendes Verfahren zum Auslesen der Daten implementieren. Dieses Verfahren kann auch von einer anderen Einrichtung implementiert werden, bspw. einem handelsüblichen PC.

Ein Ausleseverfahren unterteilt sich in zwei Phasen. Zunächst wird eine initiale Leseposition bestimmt und anschließend wird beginnend von der initialen Leseposition der Speicher sequentiell ausgelesen. Die erste Phase entspricht dem Vorgehen zum Auffinden der initialen Schreibposition. Hierbei wird der Speicher sequentiell ausgelesen und ein Übergang von einem Codewort zum anderen in den sequentiell ausgelesenen Daten identifiziert. Das Ende des Übergangs markiert die initiale Leseposition, von welcher aus mit dem sequentiellen Auslesen begonnen wird. Die sequentiell von der Leseposition ausgelesenen Daten können anhand der Abschlusselemente in die einzelnen Datenblöcke zerlegt werden, die anschließend in an sich bekannter Weise verarbeitet werden können.

Ein Leseverfahren kann die folgenden Schritte umfassen:
- Lesen eines ersten sequentiellen Datenstroms aus einem nichtflüchtigen Speicher;
- Auffinden eines ersten Codeworts und eines zweiten Codeworts, die einen Übergang definieren, in dem ersten sequentiellen Datenstrom;
- Festlegen einer initialen Startposition basierend auf dem aufgefundenen Übergang;
- Lesen eines zweiten sequentiellen Datenstroms beginnend an der initialen Startposition;
- Zerlegen des zweiten sequentiellen Datenstroms in Datenblöcke basierend auf dem ersten Codewort oder dem zweiten Codewort;
- Detektieren eines Wechsels zwischen dem ersten Codewort und dem zweiten Codewort in dem zweiten sequentiellen Datenstrom.

Das Auslesen des zweiten sequentiellen Datenstroms erfolgt rollierend, d.h., wenn das Ende des nichtflüchtigen Speichers erreicht wird, wird am Anfang des nichtflüchtigen Speichers der Lesevorgang fortgesetzt.

Es versteht sich, dass die Beschreibung beispielhaft zu verstehen ist und den Schutzgegenstand nicht einschränkt. Vielmehr wird der Schutzgegenstand durch die beigefügten Ansprüche bestimmt.

## Patentansprüche

1. Vorrichtung (10) zur Speicherung von Daten in einem nichtflüchtigen Speicher (28), aufweisend:
eine Datenverarbeitungseinheit (12), die eingerichtet ist,
Datenblöcke (20) zu erfassen,
jeden Datenblock der Datenblöcke (20) mit einem Abschlusselement (22) zu terminieren und
die terminierten Datenblöcke zu einem seriellen Datenstrom (24) zusammenzusetzen, sowie
eine Speichereinheit (14), die eingerichtet ist,
den seriellen Datenstrom (24) sequentiell in den nichtflüchtigen Speicher (28) zu schreiben,
wobei das Abschlusselement (22) zwischen einem ersten Codewort (38) und mindestens einem zweiten Codewort (42) variierbar ist,
**gekennzeichnet dadurch, dass**
die Speichereinheit (14) den nichtflüchtigen Speicher (28) solange mit dem seriellen Datenstrom (24) beschreibt, bis der Speicher keinen freien Speicherbereich mehr hat, wobei die Datenverarbeitungseinheit (12) zu diesem Zeitpunkt zwischen der Verwendung des ersten Codeworts (38) und des zweiten Codeworts (42) als Abschlusselement (22) wechselt und fortan den seriellen Datenstrom (24) mit dem gewechselten Abschlusselement erzeugt, und wobei die Speichereinheit (14) den nichtflüchtigen Speicher (28) nach dem Wechsel rollierend mit dem seriellen Datenstrom (24) überschreibt.

2. Vorrichtung nach Anspruch 1, wobei die Speichereinheit (14) eingerichtet ist, den nichtflüchtigen Speicher (28) sequentiell zu adressieren, um diesen vollständig, insbesondere ohne eine explizite Organisationsstruktur, sequentiell zu beschreiben.

3. Vorrichtung nach Anspruch 1 oder 2, wobei die Speichereinheit (14) dazu eingerichtet ist, den nichtflüchtigen Speicher (28) sequentiell auszulesen, einen Wechsel des Abschlusselements (22) zu identifizieren, um eine initiale Startposition zu bestimmen, sowie an der initialen Startposition mit dem sequentiellen Schreiben des seriellen Datenstroms (24) zu beginnen.

4. Vorrichtung nach einem der Ansprüche 1 bis 3, wobei die Speichereinheit (14) dazu eingerichtet ist, eine gegenwärtige Schreibposition (40) zu speichern.

5. Vorrichtung nach Anspruch 4, wobei die Speichereinheit (14) dazu eingerichtet ist, die gegenwärtige Position (40) in einem flüchtigen Speicher zu speichern, und nur, wenn ein Wert für die gegenwärtige Schreibposition (40) in dem flüchtigen Speicher hinterlegt ist, an der gegenwärtigen Position (40) den seriellen Datenstrom (24) zu schreiben.

6. Vorrichtung nach einem der Ansprüche 1 bis 5, wobei die Datenverarbeitungseinheit (12) eingerichtet ist, in den Datenblöcken (20) Zeichen, die dem ersten Codewort (38) oder dem zumindest zweiten Codewort (42) entsprechen, zu maskieren.

7. Vorrichtung nach einem der Ansprüche 1 bis 6, wobei die Datenverarbeitungseinheit (12) eingerichtet ist, für jeden Datenblock der Datenblöcke (20) eine Checksumme zu generieren und dem jeweiligen Datenblock anzuhängen.

8. Vorrichtung nach einem der Ansprüche 1 bis 7, wobei die Datenverarbeitungseinheit (12) eingerichtet ist, jeden Datenblock der Datenblöcke (20) zu verschlüsseln.

9. Vorrichtung nach einem der Ansprüche 1 bis 8, wobei die Datenblöcke (20) eine variable Länge haben.

10. Verfahren (100) zur Speicherung von Daten in einem nichtflüchtigen Speicher (28), aufweisend:
durch eine Datenverarbeitungseinheit (12):
- Erfassen (S101) von Datenblöcken (20);
- Terminieren (S102) jedes Datenblocks der Datenblöcke (20) mit einem Abschlusselement (22);
- Zusammensetzen (S103) der terminierten Datenblöcke zu einem seriellen Datenstrom (24),
wobei das Abschlusselement (22) zwischen einem ersten Codewort (38) und einem zweiten Codewort (42) variierbar ist;
durch eine Speichereinheit (14):
- Schreiben (S104) des seriellen Datenstroms (24) in den nichtflüchtigen Speicher (28);
**dadurch gekennzeichnet, dass**
die Speichereinheit (14) den nichtflüchtigen Speicher (28) solange mit dem seriellen Datenstrom (24) beschreibt, bis der Speicher keinen freien Speicherbereich mehr hat, wobei die Datenverarbeitungseinheit (12) zu diesem Zeitpunkt zwischen der Verwendung des ersten Codeworts (38) und des zweiten Codeworts (42) als Abschlusselement (22) wechselt und fortan den seriellen Datenstrom (24) mit dem gewechselten Abschlusselement erzeugt, und wobei die Speichereinheit (14) den nichtflüchtigen Speicher (28) nach dem Wechsel rollierend mit dem seriellen Datenstrom (24) überschreibt.

11. Ein Verfahren zum Auslesen von Daten aus einem nichtflüchtigen Speicher (28), aufweisend:
- Lesen ab einer Startposition (34) des nichtflüchtigen Speichers eines ersten sequentiellen Datenstroms von dem nichtflüchtigen Speicher (28) bis zum
- Auffinden eines Übergangs von einem vordefinierten ersten Codewort (38) zu einem vordefinierten unterschiedlichen zweiten Codewort (42) in dem ersten sequentiellen Datenstrom;
- Festlegen einer initialen Leseposition an einem Ende des aufgefundenen Übergangs (48);
- Lesen eines zweiten sequentiellen Datenstroms beginnend an der initialen Leseposition bis zu einem letzten zweiten Codewort;
- Zerlegen des zweiten sequentiellen Datenstroms in Datenblöcke (20) , die jeweils mit dem zweiten Codewort (42) terminiert sind;
- Lesen eines dritten sequentiellen Datenstroms beginnend am Ende des letzten zweiten Codeworts, rollierend bis zu einem Anfang des Übergangs;
- Zerlegen des dritten sequentiellen Datenstroms in Datenblöcke (20), die jeweils mit dem ersten Codewort (38) terminiert sind.

## Claims

1. Apparatus (10) for storing data in a non-volatile memory (28), comprising:
a data processing unit (12) configured to
acquire data blocks (20),
terminate each data block of the data blocks (20) with a terminating element (22), and
combine the terminated data blocks into a serial data stream (24); and
a memory unit (14) configured to
write the serial data stream (24) sequentially into the non-volatile memory (28),
wherein the terminating element (22) is variable between a first code word (38) and at least one second code word (42),
**characterized in that**
the memory unit (14) writes to the non-volatile memory (28) the serial data stream (24) until the memory no longer has any free memory area, wherein the data processing unit (12) switches at this point between using the first code word (38) and the second code word (42) as the terminating element (22) and from then on generates the serial data stream (24) with the switched terminating element, and
wherein the memory unit (14) overwrites the non-volatile memory (28) with the serial data stream (24) in a rolling manner after the switch.

2. Apparatus according to claim 1, wherein the memory unit (14) is configured to address the non-volatile memory (28) sequentially in order to sequentially write to it completely, in particular without an explicit organizational structure.

3. Apparatus according to claim 1 or 2, wherein the memory unit (14) is configured to sequentially read the non-volatile memory (28), to identify a switch of the terminating element (22) in order to determine an initial start position, and to begin sequential writing of the serial data stream (24) at the initial start position.

4. Apparatus according to any one of claims 1 to 3, wherein the memory unit (14) is configured to store a current writing position (40).

5. Apparatus according to claim 4, wherein the memory unit (14) is configured to store the current position (40) in a volatile memory and to write the serial data stream (24) at the current writing position (40) only if a value for the current writing position (40) is stored in the volatile memory.

6. Apparatus according to one of claims 1 to 5, wherein the data processing unit (12) is configured to mask characters corresponding to the first code word (38) or the at least second code word (42) in the data blocks (20).

7. Apparatus according to one of claims 1 to 6, wherein the data processing unit (12) is configured to generate a checksum for each data block of the data blocks (20) and to append it to the respective data block.

8. Apparatus according to any one of claims 1 to 7, wherein the data processing unit (12) is configured to encrypt each data block of the data blocks (20).

9. Apparatus according to any one of claims 1 to 8, wherein the data blocks (20) have a variable length.

10. Method (100) for storing data in a non-volatile memory (28), comprising:
by a data processing unit (12):
- Acquiring (S101) data blocks (20);
- Terminating (S102) each data block of the data blocks (20) with a terminating element (22);
- Combining (S103) the terminated data blocks into a serial data stream (24),
wherein the terminating element (22) is variable between a first code word (38) and a second code word (42);
by a memory unit (14):
- Writing (S104) the serial data stream (24) to the non-volatile memory (28);
wherein
the memory unit (14) writes to the non-volatile memory (28) the serial data stream (24) until the memory no longer has any free memory area, wherein the data processing unit (12) switches at this point between using the first code word (38) and the second code word (42) as the terminating element (22) and from then on generates the serial data stream (24) with the switched terminating element, and
wherein the memory unit (14) overwrites the non-volatile memory (28) with the serial data stream (24) in a rolling manner after the switch.

11. A method for reading data from a non-volatile memory (28), comprising:
- Reading, from a start position (34) of the non-volatile memory, a first sequential data stream from the non-volatile memory (28) until
- Finding a transition from a predefined first code word to a predefined different second code word in the first sequential data stream;
- Setting an initial reading position at one end of the found transition (48);
- Reading a second sequential data stream starting at the initial reading position up to a final second code word;
- Separating the second sequential data stream into data blocks (20) that are each terminated with the second code word (42);
- Reading a third sequential data stream starting at the end of the last second code word, in a rolling manner up to the beginning of the transition;
- Separating the third sequential data stream into data blocks (20), each of which is terminated with the first code word (38).

## Revendications

1. Dispositif (10) pour la mémorisation de données dans une mémoire non volatile (28), présentant :
une unité de traitement de données (12) qui est configurée pour
enregistrer des blocs de données (20),
terminer chaque bloc de données parmi les blocs de données (20) par un élément final (22) et
assembler les blocs de données terminés en un flux de données sériel (24), et
une unité de mémorisation (14) qui est configurée pour
écrire de manière séquentielle le flux de données sériel (24) dans la mémoire non volatile (28),
dans lequel l'élément final (22) peut varier entre un premier mot de code (38) et au moins un second mot de code (42),
**caractérisé en ce que**
l'unité de mémorisation (14) écrit dans la mémoire non volatile (28) avec le flux de données sériel (24) jusqu'à ce que la mémoire n'ait plus de zone de mémoire libre, dans lequel l'unité de traitement de données (12) change à cet instant entre l'utilisation du premier mot de code (38) et du second mot de code (42) comme élément final (22) et génère désormais le flux de données sériel (24) avec l'élément final changé, et dans lequel l'unité de mémorisation (14) écrase la mémoire non volatile (28) avec le flux de données sériel (24) après le changement de manière continue.

2. Dispositif selon la revendication 1, dans lequel l'unité de mémorisation (14) est configurée pour adresser de manière séquentielle la mémoire non volatile (28) afin de l'écrire entièrement de manière séquentielle, en particulier sans structure d'organisation explicite.

3. Dispositif selon la revendication 1 ou 2, dans lequel l'unité de mémorisation (14) est configurée pour lire de manière séquentielle la mémoire non volatile (28), pour identifier un changement de l'élément final (22) afin de déterminer une position de départ initiale, et pour commencer l'écriture séquentielle du flux de données sériel (24) à la position de départ initiale.

4. Dispositif selon l'une des revendications 1 à 3, dans lequel l'unité de mémorisation (14) est configurée pour mémoriser une position d'écriture actuelle (40).

5. Dispositif selon la revendication 4, dans lequel l'unité de mémorisation (14) est configurée pour mémoriser la position actuelle (40) dans une mémoire volatile et pour écrire le flux de données sériel (24) à la position actuelle (40) uniquement lorsqu'une valeur pour la position d'écriture actuelle (40) est stockée dans la mémoire volatile.

6. Dispositif selon l'une des revendications 1 à 5, dans lequel l'unité de traitement de données (12) est configurée pour masquer, dans les blocs de données (20), des caractères correspondant au premier mot de code (38) ou à l'au moins second mot de code (42).

7. Dispositif selon l'une des revendications 1 à 6, dans lequel l'unité de traitement de données (12) est configurée pour générer un total de contrôle pour chaque bloc de données parmi les blocs de données (20) et pour l'ajouter au bloc de données respectif.

8. Dispositif selon l'une des revendications 1 à 7, dans lequel l'unité de traitement de données (12) est configurée pour chiffrer chaque bloc de données parmi les blocs de données (20).

9. Dispositif selon l'une des revendications 1 à 8, dans lequel les blocs de données (20) ont une longueur variable.

10. Procédé (100) pour la mémorisation de données dans une mémoire non volatile (28), présentant :
par une unité de traitement de données (12) :
- l'enregistrement (S101) de blocs de données (20) ;
- le fait de terminer (S102) chaque bloc de données parmi les blocs de données (20) avec un élément final (22) ;
- l'assemblage (S103) des blocs de données terminés en un flux de données sériel (24),
dans lequel l'élément final (22) peut varier entre un premier mot de code (38) et un second mot de code (42) ;
par une unité de mémorisation (14) :
- l'écriture (S104) du flux de données sériel (24) dans la mémoire non volatile (28) ;
**caractérisé en ce que**
l'unité de mémorisation (14) écrit dans la mémoire non volatile (28) avec le flux de données sériel (24) jusqu'à ce que la mémoire n'ait plus de zone de mémoire libre, dans lequel l'unité de traitement de données (12) change à cet instant entre l'utilisation du premier mot de code (38) et du second mot de code (42) comme élément final (22) et génère désormais le flux de données sériel (24) avec l'élément final changé, et dans lequel l'unité de mémorisation (14) écrase la mémoire non volatile (28) avec le flux de données sériel (24) après le changement de manière continue.

11. Procédé pour la lecture de données à partir d'une mémoire non volatile (28), présentant :
- la lecture, à partir d'une position de départ (34) de la mémoire non volatile, d'un premier flux de données séquentiel de la mémoire non volatile (28) jusqu'à
- la détection d'une transition d'un premier mot de code prédéfini à un second mot de code différent prédéfini dans le premier flux de données séquentiel ;
- la définition d'une position de lecture initiale à une extrémité de la transition (48) détectée ;
- la lecture d'un deuxième flux de données séquentiel commençant à la position de lecture initiale jusqu'à un dernier second mot de code ;
- la décomposition du deuxième flux de données séquentiel en blocs de données (20)
qui se terminent respectivement par le second mot de code (42) ;
- -la lecture d'un troisième flux de données séquentiel commençant à la fin du dernier second mot de code, de manière continue jusqu'à un début de la transition ;
- la décomposition du troisième flux de données séquentiel en blocs de données (20) qui se terminent respectivement par le premier mot de code (38).
